Europäisches Patentamt

(19) European Patent Office

Office européen des brevets

(11) Publication number: **0 239 227**
**B1**

(12) EUROPEAN PATENT SPECIFICATION

(45) Date of publication of patent specification: **18.07.90**

(51) Int. Cl.⁵: **C 22 B 7/00, C 22 B 11/02, C 22 B 23/02, C 22 B 34/34**

(21) Application number: **87301373.4**

(22) Date of filing: **18.02.87**

(54) Fluidised bed process for the recovery of finely divided metals.

(30) Priority: **19.02.86 GB 8604080**

(43) Date of publication of application:
**30.09.87 Bulletin 87/40**

(45) Publication of the grant of the patent:
**18.07.90 Bulletin 90/29**

(84) Designated Contracting States:
**AT BE CH DE ES FR IT LI NL SE**

(56) References cited:
**WO-A-85/00834**
**CH-A- 613 787**
**DE-A-2 019 210**
**US-A-3 671 222**
**US-A-3 899 323**
**US-A-4 022 443**
**US-A-4 547 345**

**'Die Reduktion der Eisenerze', Bogdandy & Engell, 1967, Springer Verlag, pages 200,201,227,228 &238.**

(73) Proprietor: **CAMLAW LIMITED**
**Amington Industrial Estate**
**Tamworth, Staffordshire B77 4DS (GB)**
(73) Proprietor: **Cutchey, Christopher John**
**27 The Park Pale**
**Tutbury Staffordshire DE13 9LB (GB)**
(73) Proprietor: **Keirle, Trevor James**
**7 St Lukes Road Burntwood**
**Walsall West Midlands WS7 0DN (GB)**

(72) Inventor: **Cutchey, Christopher John**
**27, The Park Pale**
**Tutbury Staffordshire DE13 9LB (GB)**
Inventor: **Keirle, Trevor James**
**7, St. Lukes Road Burtnwood**
**Walsall West Midlands WS7 0DN (GB)**

(74) Representative: **Harrison, Gordon Donald et al**
**FORRESTER & BOEHMERT Widenmayerstrasse 4/I**
**D-8000 München 22 (DE)**

Courier Press, Leamington Spa, England.

## Description

The present invention concerns a novel application of fluidised bed technology for the recovery or extraction of materials such as metals from wastes or other sources. More particularly, metals in particulate form may be recovered, primarily but not exclusively as oxides, from materials which includes substantial quantities of matter which is combustible or otherwise degradable, such as spent catalyst materials.

The invention has been developed mainly for connection with the recovery of nickel (as an oxide) from spent hydrogenation catalysts, but also has other applications as will be evident from the following description

Hydrogenation catalysts as supplied commercially for the hardening of fats and oils comprise finely divided nickel on a siliceous carrier formed into pellets with a hard fat for use with a liquid or molten state system. In use, the fat dissolves or melts and the nickel-on-carrier particles are dispersed throughout the system. The used catalyst particles are then separated by filtration into a slurry or sludge containing organic matter. This material may be returned to the reaction vessel and re-used several times, but after a period of use, it becomes spent and is removed from the system entirely.

A similar process is adopted for other hydrogenation processes, such as of nitriles to form amines where a 'Raney' nickel catalyst, a finely divided sponge nickel stored under inert gas or water, is introduced and dispersed through a system and removed contaminated with organic matter after its reaction is complete.

US—A—4547345 discloses a fluidised bed process for the recovery of molybdenum catalyst from an organic material in which the recoverable metal is in the form of finely divided particles. The material is heated in a stream of non oxidising gas at a temperature of at least 400°C to evolve the organic material in the gas stream leaving a powdery metallic residue containing essentially all of the molybdenum.

The present invention, in one specific aspect, is concerned with the recovery of the nickel content of this material as distinguished from catalyst regeneration methods in which a used catalyst is treated to remove impurities so that it can be re-used as a catalyst without further treatment. Such regenerable catalysts essentially consist of finely divided metals on a suitable solid support medium and are used in gaseous phase reactions, such as catalytic cracking, in which the solid support medium remains physically intact. After a regeneration process, the catalytic metal is still bound to its solid support medium, whereas in the process in accordance with the invention the catalytic metal is separated from the support medium and usually oxidised, so that the catalyst is destroyed but the metal can be recovered.

According to the invention we provide a process for the recovery of metal from a material in which the recoverable metal is present in the form of finely divided particles in association with combustible or otherwise degradable matter, wherein said material is fed into the lower portion of a fluidised bed which is constituted by an inert carrier material and which is maintained under conditions such that the degradable matter is consumed and eliminated in the form of waste gases, the size of said particles and the operating conditions of the fluidised bed being chosen to ensure that the recovered metal particles, either as free metal or as a compound thereof, rise to the top of the fluidised bed with the waste gases, and are withdrawn from the top of a vessel containing the fluidised bed and separated from the waste gases after leaving the vessel.

The material being treated may be supplied on a pulverised form, or as a powder or granules or the like, or as a suspension or slurry in a liquid, or as a paste, or in a molten or semi-molten state.

In a typical application, the material may comprise a spent catalyst, such as finely divided nickel entrained in organic matter such as fat. Such material may be heated, preferably at least partly by heat recovered from the exhaust gases from the fluidised bed, to liquify the material at least to an extent sufficient to enable it to flow or at least be extruded. The softened or liquified material may be introduced into the fluidised bed through inlet nozzles distributed across and/or around the base of the fluidised bed. The bed may be fluidised by air and the operating conditions established such that the organic matter is burned off. For this purpose the bed may be heated either externally (for example by electric heaters or otherwise) or internally (for example by introducing fuel).

The process is applicable where the metal to be recovered is present initially in the material to be treated in a finely divided form such that the freed metal, or metal-containing, particles are rendered upwardly mobile under the operating conditions which exist in the fluidised bed or where the state of the metal content and the treatment conditions are such as to give rise to free particles containing the metal which are upwardly mobile. Typical particle sizes for this purpose may be below 50 microns although in some circumstances larger particle sizes may be encountered.

Depending on the nature of the metal concerned, it may be obtained either as the metal itself or at least partially as an oxide from which the metal can be recovered if required by appropriate chemical treatment. Under some circumstances, compounds other than oxides may also be formed.

It is envisaged that in many cases, where the organic content of the material is sufficiently high, the combustion of such organic matter may provide sufficient heat output to maintain the fluidised bed at the desired working temperature and that additional heating, for example from external electric heaters, will be required only during start-up.

Where the orgainc content is not sufficient to maintain the required temperature in this way, additional combustible matter may be supplied. For example, diesel oil or other suitable combustible fuel, including possibly waste matter for destruction, may be added to the material to be treated in the required proportions prior to its introduction to the fluidised bed. Alternatively, such a fuel may be supplied to the fluidised bed through a separate distribution system whereby the rate of supply can be controlled separately. Also, of course, external or other heaters could be used to supply additional heat when necessary.

Where combustion of the organic material involves a highly exothermic reaction, water may be added to the material to be treated, or suppled separately to the fludised bed, to cool the bed and prevent its temperature rising excessively.

Accordingly, particulate materials which are non-combustible and non-degradable (under the conditions which exist in the fluidised bed) are recovered by processing in the fluidised bed under conditions such that combustible or degradable matter is eliminated and the required particulate matter, by a process of elutriation, rise through the fluidised bed so that it can be taken off at the top. In this way, particles of finely divided metals such as gold or platinum may be recovered as the metal, whereas particles of less inert metals, such as nickel, cobolt, or molybdenum may be recovered in the form of oxides which can be further processed to recover the metal if desired, or used in the production of other materials.

Whilst such a process is particularly applicable wher the material to be recovered is already in the required finely divided form, it will be appreciated that other residues or waste material could be comminuted as appropriate so as to reduce the particle size to an appropriate value. Thus, for example, printed circuit boards containing significant quantities of metals such as gold or platinum could be ground up finely and fed to the fluidised bed either in a pulverised form, or in the form of a paste in which the solid particles are mixed with a suitable fuel, such as diesel oil, to assist in the combustion of the non-metallic components.

It may, in certain circumstances, be necessary for the inert carrier material together with the recovered particles to be removed from the top of the bed and subjected to any suitable separation process, after which the carrier material may be returned to the fluidised bed.

The invention will now be described by way of example, with reference to the accompaning drawings which illustrate diagramatically one arrangement for carrying out the process in accordance with the invention.

Waste material, such as paste of organic fatty matter containing particles of a spent catalyst, such as finely divided nickel on particles of an inorganic carrier substance, is fed into a pre-heater 10 where the temperature of the material is raised to a value such that it becomes liquid or semi-liquid and flowable. The softened material in then supplied through a thermally insulated pipe 11 to the interior of a fluidised bed furnace 12. The material is injected at or through the base of the fluidised bed, which is maintained in a fluidised state by air from a plenum chamber 13.

The bed is maintained at such a temperature that the organic material is degraded to volatile compounds, primarily by oxidation, leaving the nickel particles which are converted largely to oxide. The upward air flow through the bed causes the oxide particles to rise through the bed by a process of elutriation due to the initially finely divided form of the nickel in the catalyst material. The oxide particles are carried upwardly out of the bed and into a cyclone separator 14 and the recovered oxide is collected in a container 15. Waste gases from the bed are fed from the separator 14 to a heat exchanger 16 and thence to an exhaust 17. A fan 18 supplies cold air to the other side of the heat exchanger to extract heat from the hot exhaust gases, and pipe 19 conveys the heated air to a jacket 20 forming part of the pre-heater 10.

Depending on the calorific content of the organic material fed to the fluidised bed, the temperature of the bed may largely be maintained by the combustion of such material. However, an external electric heater 21 may be provided to bring the bed initially up to the required operating temperature.

A controller 22 may also be provided to adjust the output of the heater 21 to maintain the bed temperature if necessary whilst the process is in operation. Alternatively, a combustible substance such as diesel oil may be added to the material in the pre-heater 10 or it may be injected into the bed separately for the purpose of raising the bed to the working temperature and maintaining at that temperature.

Where the combustion reaction is highly exothermic, water may be added or injected instead of fuel.

The invention is especially suitable for the recovery of catalyst metals since such metals are used in very finely divided form and the oxide particles produced can be separated from the fluidised bed by elutriation. Noble metals may also be recovered as the metals rather than their oxides. The invention may also be utilised for the recovery of similar metals, as oxides or other compounds or as such, from other sources of waste material providing the recoverable metal content thereof is in, or can be reduced to, sufficiently finely divided form.

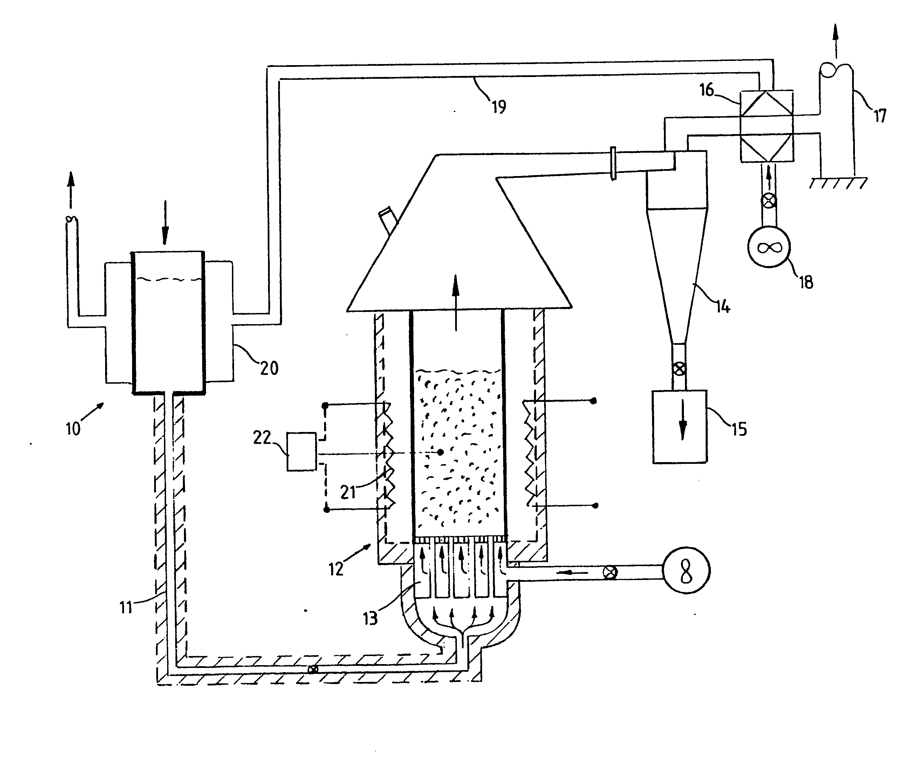

## Claims

1. A process for the recovery of metal from a material in which the recoverable metal is present in the form of finely divided particles in association with combustible or otherwise degradable matter, wherein said material is fed into the lower portion of a fluidised bed which is consituted by an inert carrier material and which is maintained under conditions such that the degradable matter is consumed and eliminated in the form of waste gases, the size of said particles and the operating conditions of the fluidised bed being chosen to ensure that the recovered metal particles, either as free metal or as a compound therof rise to the top of the fluidised bed with the waste gases, and are withdrawn from the top of a vessel containing the fluidised bed and separated from the waste gases after leaving the vessel.

2. A process according to Claim 1 wherein the material treated comprises a spent catalyst including said metal particles on a carrier substance entrained in organic matter which is oxidised and/or degraded to volatile products in the fluidised bed, the recoverable metal particles becoming separated from the carrier substance within the fluidised bed.

3. A process according to Claim 2 wherein the metal particles in the spent catalyst comprise finely divided nickel particles and the nickel is recovered as nickel oxide.

4. A process according to any one of the preceding claims wherein the size of the recoverable metal particles is less than 50 microns.

5. A process according to any one of Claims 2 to 4 wherein the fluidised bed is maintained at its working temperature by combustion of the organic matter.

6. A process according to any one of Claims 2 to 4 wherein additional organic matter is added to the material in a quantity sufficient to enable the fluidised bed to be maintained at its working temperature by combustion of the organic matter and said added organic matter.

7. A process according to any one of Claims 1 to 4 wherein water is added to the material to be treated in a quantity sufficient to enable the fluidised bed to be maintained at its working temperature by cooling due to evaporation of said added water.

8. A process according to any one of Claims 1 to 4 wherein water is injected into the fluidised bed to cool it and maintain it at its working temperature.

9. A process according to any one of the preceding claims wherein the material to be treated is heated prior to its introduction into the fluidised bed.

10. A process for the recovery of metal as an oxide from a material in which the metal is present in the form of finely divided particles on an inert carrier substance dispersed in a fatty organic substance, wherein said material is fed in a liquid, or semi-liquid, state into the lower portion of a fluidised bed which comprises an inert carrier material and which is maintained at a working temperature such that the organic substance is oxidised and/or degraded to a volatile form and eliminated in a gaseous phase exhaust, and the metal particles are at least partially oxidised and rise to the top of the fluidised bed by elutriation, the oxidised particles being carried from the bed and from a vessel which housed the bed with the gaseous phase exhaust and separated therefrom.

## Patentansprüche

1. Verfahren zur Rückewinning von Metall aus einem Material, in dem das rückewinnbare Metall zusammen mit brennbarer oder auf andere Weise abbaubarer Materie in Form feinverteilter Teilchen vorliegt, wobei besagtes Material in den unteren Abschnitt eines Fließbettes eingebracht wird, das von einem interten Trägermaterial gebildet wird und das unter solchen Bedingungen gehalten wird, daß die abbaubare Materie verbraucht und in Form von Abgasen beseitigt wird, wobei die Größe besagter Teilchen und die Betriebsbedingungen des Fließbettes so gewählt werden, daß sichergestellt ist, Daß die rückewonnenen Metallteilchen, entweder als freies Metall oder als eine Verbindung desselben mit den Abgasen zum oberen Ende des Fließbettes aufsteigen und vom oberen Ende eines Behälters, der das Fließbett enthält, abgezogen und nach Verlassen des Behälters von den Abgasen abgetrennt werden.

2. Verfahren nach Anspruch 1, dadurch gekennzeichnet, daß die behandelte Material einen verbrauchten Katalysator umfaßt, der besagte Metallteilchen auf einer Trägersubstanz einschließt, mitgeführt in organischer Materie, die im Fließbett oxidiert und/oder zu flüchtigen Produkten abgebaut wird, wobei die rückewinnbaren Metallteilchen sich im Fließbett von der Trägersubstanz trennen.

3. Verfahren nach Anspruch 2, dadurch gekennzeichnet, daß die Metallteilchen im verbrauchten Katalysator feinverteilte Nickelteilchen umfassen und das Nickel als Nickeloxid rückgewonnen wird.

4. Verfahren nach einem der vorangehenden Anaprüche, dadurch gekennzeichnet, daß die Größe der rückgewinnbaren Metallteilchen kleiner ist als 50 Mikron.

5. Verfahren nach einem der Ansprüche 2 bis 4, dadurch gekennzeichnet, daß das Fließbett durch Verbrennung der organischen Materie auf seiner Arbeitstemperatur gehalten wird.

6. Verfahren nach einem der Ansprüche 2 bis 4, dadurch gekennzeichnet, daß dem zu behandelnden Material zusätzliche organische Materie in einer Menge zugesetzt wird, die ausreicht, um es zu ermöglichen, daß des Fließbett durch Verbrennung der organischen Materie und besagter zugesetzten organischen Materie auf seiner Arbeitstemperatur gehalten wird.

7. Verfahren nach einem der Ansprüche 1 bis 4, dadurch gekennzeichnet, daß dem zu behandelnden Material Wasser in einer Menge zugesetzt wird, dei ausreicht, um es zu ermöglichen, daß des Fließbett durch Abkühlung aufgrund der Verdampfung besagten zugesetzten Wassers aus seiner Arbeitstemperatur gehalten wird.

8. Verfahren nach einem der Ansprüche 1 bis 4, dadurch gekennzeichnet, daß Wasser in das Fließbett eingespritzt wird, um es abzukühlen dun auf seiner Arbeitstemperatur zu halten.

9. Verfahren nach einem der vorangehenden Ansprüche, dadurch gekennzeichnet, daß das zu behandelnde Material vor seiner Eingabe in das Fließbette erhitzt wird.

10. Verfahren zur Rückgewinnung von Metall als ein Oxid aus einem Material, in dem das Metall in Form feinverteilter Teilchen auf einer inerten Trägersubstanz, dispergiert in einer fettigen organischen Substanz, vorliegt, wobei besagtes Metall in einem flüssigen oder halbflüssigen Zustand in den unteren Abschnitt eines Fließbettes eingegeben wird, das ein inertes Trägermaterial umfaßt und das auf solch einer Arbeitstemperatur gehalten wird, daß die organische Substanz oxidiert und/oder zu einer flüchtigen Form abgebaut und in einem Gasphasenabstrom beseitigt wird, und daß die Metallteilchen zumindest teilweise oxidiert werden und durch Aufschwemmen zum oberen Ende des Fließbettes aufsteigen, wobei die oxidierten Teilchen mit dem Gasphasenabstrom aus dem Bett und asu einem Behälter, der das Bett aufnimmt, ausgetragen und davon abgetrennt werden.

## Revendications

1. Procédé pour récupérer du métal dans un matiériau dans lequel le métal récupérable est présent sous la forme de particules finement divisées en association avec de la matière combustible ou dégradable d'un manière ou d'une autre, dans lequel on amène ledit matériau à la partie inférieure d'un lit fluidisé qui est constitué per un matériau support inerte et qui est maintenu dans des conditions telles que la matière dégradable est détruite et éliminée sous forme de gaz perdus, la dimension des particules et les conditions opératoires du lit fluidisé étant choisies de manière à permettre aux particules du métal récupéré, sous la forme soit de métal libre, soit d'un compose de celui-ci, de s'élever jusqu'à la partie supérieure du lit fluidisé avec les gaz perdus, d'être extraites de la partie supérieure d'un récipient contenant le lit fluidisé, et d'être séparées des gaz perdus après avoir quitté le récipient.

2. Procédé conforme à la revendication 1, dans lequel le matériau traité consiste en un catalyseur uné qui comprend les particules de métal sur une substance support entraînée dans de la matière organique qui est oxydée et/ou dégradée en produits volatiles dans le lit fluidisé, les particules de métal récupérables se trouvant séparées de la substance support dans le lit fluidisé.

3. Procédé conforme à la revendication 2, dans lequel les particules de métal du catalyseur usé comprennent des particules de nickel finement divisées, et le nickel est récupéré sous forme d'oxyde de nickel.

4. Procédé conforme à l'une quelconque des revendications précédentes, dans lequel la dimension des particules du métal récupérable est inférieure à 50 microns.

5. Procédé conforme à l'une quelconque des revendications 2 à 4, dans lequel le lit fluidisé est maintenu à sa température de fonctionnement par la combustion de la matière organique.

6. Procédé conforme à l'une quelconque des revendications 2 à 4, dans lequel on ajoute de la matière organique supplémentaire au matériau à traiter à raison d'une quantité suffisante pour permettre au lit fluidisé de se maintenir à sa température de fonctionnement par la combustion de la matière organique et de ladite matière organique ajoutée.

7. Procédé conforme à l'une quelconque des revendications 1 à 4, dans lequel on ajoute de l'eau au matériau à traiter à raison d'une quantité suffisante pour permettre au lit fluidisé de se maintenir à sa température de fonctionnement par le refroidissement provoqué par l'évaporation de l'eau ajoutée.

8. Procédé conforme à l'une quelconque des revendications 1 à 4, dans lequel on injecte de l'eau dans le lit fluidisé pour le refroidir et le maintenir à sa température de fonctionnement.

9. Procédé conforme à l'une quelconque des revendications précédentes, dans lequel on chauffe le produit à traiter avant son introduction dans le lit fluidisé.

10. Procédé pour récupérer du métal sous la forme d'un oxyde dans un matériau dans lequel le métal est présent sous la forme de particules finement divisées sur une substance support dispersée dans une substance organique grasse, dans lequel on amène le matériau à l'état liquide ou semi-liquide à la partie inférieure d'un lit fluidisé qui est constitué par un matériau support inerte et qui est maintenu à une température de fonctionnement telle que la substance organique est oxydée et/ou dégradée en une forme volatile et est éliminée dans une phase gazeuse évacuée, et les particules du métal sont au moins partiellement oxydées er s'élèvant jusqu'à la partie supérieure du lit fluidisé sous l'effet du triage par le courant gazeux, les particules oxydées étant emportées hors du lit fluidisé et hors d'un récipient qui contient le lit fluidisé avec le phase gazeuse évacuée, et séparées de cette dernière.